Europäisches Patentamt

(19) European Patent Office

Office européen des brevets

(11) Publication number: **0 257 959**
**A2**

(12) **EUROPEAN PATENT APPLICATION**

(21) Application number: **87307280.5**

(22) Date of filing: **18.08.87**

(51) Int. Cl.⁴: **G 01 D 5/26**

(30) Priority: **21.08.86 GB 8620315**

(43) Date of publication of application:
**02.03.88 Bulletin 88/09**

(84) Designated Contracting States: **DE**

(71) Applicant: **Rogers, Alan John**
**Woodbury Burnhams Road**
**Bookham Surrey KT23 3BA (GB)**

(72) Inventor: **Rogers, Alan John**
**Woodbury Burnhams Road**
**Bookham Surrey KT23 3BA (GB)**

(74) Representative: **Cullis, Roger**
**Patent Department National Research Development**
**Corporation 101 Newington Causeway**
**London SE1 6BU (GB)**

(54) Optical fibre measurement apparatus and method.

(57) A monomode "hi-bi" optical fibre possesses two polarisation eigenmodes whose relative velocity depends on an external field. The magnitude of the external field (measurand) is determined by measuring the change in relative velocity either as an average over the length of the fibre or distributively, the latter allowing the distribution of the measurand to be determined as a continuous function of position along the length of the fibre.

The velocity change is measured by causing the two eigenmodes (after polarisation control) to interfere optically on the surface of a "square-law" photodetector. This interference yields a difference frequency which may be either averaged over the fibre propagation time to give a "point" measurement, or time resolved to give a measurement spatially distributed along the length of the fibre

EP 0 257 959 A2

**Description**

OPTICAL FIBRE MEASUREMENT APPARATUS AND METHOD

This invention relates to the measurement of parameters (measurands) using optical fibres.

The value of the measurand is determined by allowing it to affect the light propagation properties of an fibre in some way, and thus causing it to affect one or more of the characterising properties of light propagating in the fibre, such as its amplitude, intensity, phase, polarisation state or frequency. One of the difficulties faced in trying to design sensor systems based on these ideas is that of ensuring that the observed change in the light parameter is dependent only on the measurand and on one or more of a variety of other unwanted effects; this difficulty is often met by introducing some degree of "referencing" with respect to a light signal which is influenced by the unwanted effects but not by the measurand (eg light at a different wavelength).

We have devised a method which provides automatic referencing, at the same time as providing an indicating signal in a convenient, accurately-measurable form. It can also be used in a configuration which allows the measurement processing to be performed in a much longer time than is normal for distributed optical fibre measurement systems, and by many orders of magnitude.

According to the present invention, there is provided a method of measuring a measurand comprising subjecting a region of a birefringent monomode optical fibre to the influence of said measurand, launching radiation into said fibre, receiving radiation scattered from said region, allowing eigenmode components of said received radiation to interfere and determining from an interference pattern produced thereby the spatial distribution of said measurand.

Birefringent fibre, known as "hi-bi" fibre, is available commercially and one form allows the propagation of two orthogonal linearly polarised eigenmodes with markedly differing group velocities. The birefringence properties are normally characterised via the fibre length ("beat length") over which a phase difference of $2\pi$ is introduced between the modes for a specified optical wavelength. Beat lengths of less than 1mm are presently available, for 633nm wavelength radiation.

Suppose that a narrow optical pulse is launched into this fibre, with equal energies in each of the two eigenmodes. Provided that the polarisation effects of all external agencies are small compared with the intrinsic polarisation properties of the fibre (and this will almost certainly be so for beat lengths as small as 1mm) there will be negligible coupling of energy between the modes, even over several hundred metres of fibre, Backscattered radiation from the propagating pulse will return to the launch end of the fibre, and its emerging polarisation state will vary, with a period of the order of the time which light takes to traverse one half beat length, from one to ten picoseconds, say. This is too rapid a variation for practical detection and any detector with response time significantly greater than this will interpret the light as essentially unpolarised.

The physical basis of this proposal is to allow the measurand to vary the birefringence, and thus the relative group velocity, of the two modes. Provided that the quantitative relationship between the measurand and the birefringence is known, a mapping of the group velocity difference as a function of position along the fibre allows the corresonding distribution of the measurand to be determined.

To do this we allow the two modes, re-emerging at the launch end of the fibre after backscatter, to interfere optically, on the surface of "square-law" photodetector. (This will require that one of the modes first has its polarisation direction rotated through 90°).

We may write the electric fields for the two modes in the form:

$E_1 = E_0 \cos(\omega t + \varphi_1)$    (1a)

$E_2 = E_0 \cos(\omega t + \varphi_2)$    (1b)

(where $\omega$ is the angular frequency of the optical wave).

Now for a distance s along the fibre we have for constant velocity, c:

$\varphi = \omega s/c$ (taking $\varphi = 0$ at $s = 0$

For variable c we must write, however:

$$\phi(s) = \int_0^S \frac{ds}{c(s)}$$

Hence we have for the two modes:

$$\phi_1(s) = \int_0^S \frac{ds}{c_1(s)} \qquad (2a)$$

$$\phi_2(s) = \int_0^S \frac{ds}{c_2(s)} \qquad (2b)$$

since the two modes possess different velocities $c_1$, $c_2$, in "hi-bi" fibre. Now the external measurand may be arranged to vary either one or both of these velocities in a deterministic way. The action, for example, of pressure, strain, temperature, electric field, magnetic field via the elasto-optic, thermo-optic, electro-optic and magneto-optic effects on the refractive index of a material medium are well known.

With or without the action of a measurand the difference between $c_1$ and $c_2$ will, however, always be small. Thus we may write:

$$c_1(s) = c - v(s)/2 \quad )$$
$$\qquad\qquad\qquad ) \quad v(s) \ll c$$
$$c_2(s) = c + v(s)/2 \quad )$$

Thus from equations (2) we see that:

$$\phi_1(s) - \phi_2(s) = \frac{2\omega}{c^2} \int_0^S v(s)\, ds$$

If we now consider the phase difference, $\Delta\varphi$, between the two re-emerging modes after backscatter from a point s in the fibre, then we must multiply by two, hence:

$$\Delta\phi = 2(\phi_1 - \phi_2) = \frac{2\omega}{c^2} \int_0^S v(s)\, ds \qquad (3)$$

If, now, the two modes interfere on the surface of a "square-law" detector, sum and difference frequencies will be generated (amongst others) and, referring back to equations (1), we see that this implies the presence of an electronic difference term:

$E_0^2 \cos(2\varphi_1 - 2\varphi_2) = E_0^2 \cos \Delta\varphi \qquad (4)$

Now as the pulse propagates down the fibre the s dependence of v will generate a time dependence of $\Delta\varphi$ [equation (3)]. The term given in equation (4) thus becomes time-variable with "instantaneous" frequency given by:

$$\omega_D = \frac{d(\Delta\phi)}{dt}$$

From equation (3) we see that

$$\omega_D = \frac{d(\Delta\phi)}{dt} = \frac{d(\Delta\phi)}{ds} \frac{ds}{dt} = \frac{2\omega}{c} v(s)$$

Hence,

$f_D(t) \ (= \omega_D(t)/2\pi) = \frac{2f}{c} v(s) \ (s = ct) \qquad (5)$

showing that a measurement of the function $f_D(t)$ provides a measurement of v(s) and thus also of the spatial distribution of any measurand which affects v(s) in a known way. One advantage of this is that frequency is a relatively accurately measurable quantity.

An embodiment of the invention will now be described by way of example, with reference to the accompanying drawing which shows in schematic form, apparatus for measuring the spatial variation of a

3

measurand.

Referring to the drawing, a light source (1) feeds a pulse of light into a "hi=bi" monomode optical fibre (3) via a beamsplitter (2). The birefringence of the which is backscattered from the fibre enters the polarisation beamsplitter (5) via the beamsplitter (2). The two linearly polarised components of the light which emerge from (5) are controlled by the polarisation optical components (6) and the mirrors (7) in such a way as to cause them to interfere optically on a "square-law" photodetector (8). An integrator (9) and a frequency meter (10) allow the distribution of the measurand field along the fibre to be conveniently displayed in a screen (11).

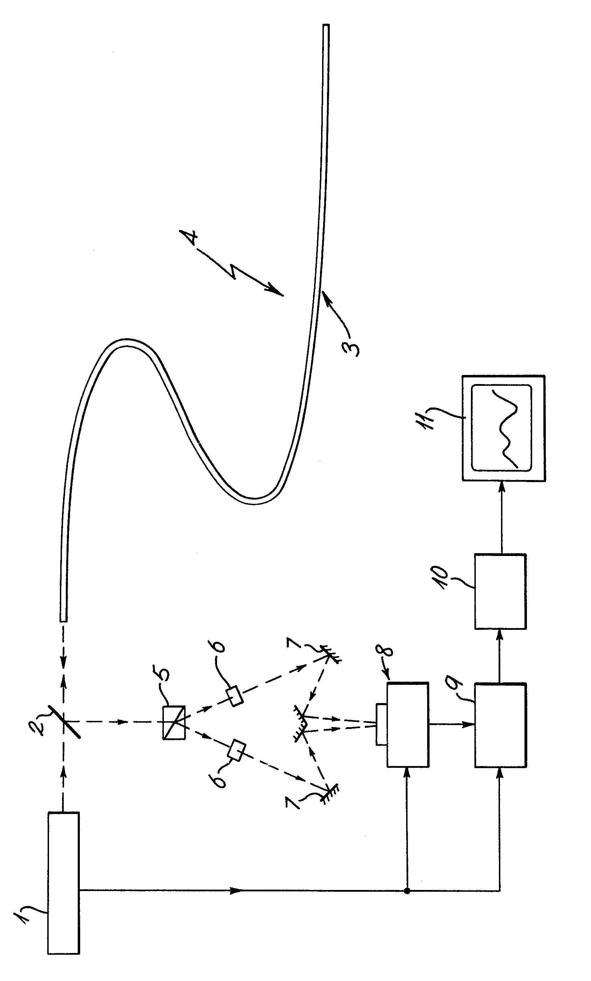

Many other types of arrangements are possible, using the same basic ideas, but differing in detail from that shown in Figure 1. One such arrangement which may be mentioned is that which uses the interaction between propagating light and propagating acoustic waves in the optical fibre. This arrangement has the advantage of increasing the processing time for the output measurement indication. In this case light is launched into just one of the two eigenmodes. A counter-propagating acoustic pulse transfers some of the light to the other eigenmode as it propagates along the fibre in the other direction. The observed optical interference in this case corresponds instantaneously to the position of the acoustic pulse, which travels many orders of magnitude more slowly along the fibre than the light, and thus allows the detection system a much longer time to recognise and to interpret the output light signal.

In a second embodiment, the above principle is used for point measurements. In this method, the effect of the measurand field is integrated over a length of "hi-bi" monomode fibre. In this case either the backscattered or forward-scattered radiation's eigenmode components are allowed to interfere optically to give a difference frequency on the "square-law" photodetector whose value should be averaged over the fibre propagation time, in order to give the required integrated value of the measurand over the full fibre length.

**Claims**

1 A method of measuring a measurand characterised in that it comprises the steps of subjecting a region of a birefringent monomode optical fibre to the influence of said measurand, launching radiation into said fibre, receiving radiation scattered from said region, allowing eigenmode components of said received radiation to interfere and determining from an interference pattern produced thereby the spatial distribution of said measurand.

2. A method of measuring a measurand as claimed in claim 1 characterised in that it further comprises the step of deriving from temporal variation of said interference pattern an electrical signal the temporal variation of which is indicative of the spatial variation of said measurand.

3. A method of measuring a measurand as claimed in claim 2 characterised in that it further comprises the step of integrating said electrical signal over a time substantial equal to the time of propagation of said radiation in said fibre.

4. A method of measuring a measurand as claimed in any one of the preceding claims characterised in that said interference pattern is derived from back-scattered radiation.

5. A method of measuring a measurand as claimed in any one the preceding claim 1 to 3 characterised in that said interference pattern is derived from forward-scattered radiation.

6. Apparatus for measuring the spatial variation of a measurand characterised in that it comprises a source of radiation (1), a bi-refringent optical fibre (3) having a region sensitive to variations of said measurand, means (2) for launching radiation from said source into said fibre, means (8) for deriving an interference pattern from orthogonally-polarised components or radiation scattered from said region and means(9,10) for deriving from said interference pattern an electrical signal, the temporal variation of which provides an indication of the spatial variation of said measurand in the vicinity of said region